# EUROPEAN PATENT APPLICATION

(11) **EP 3 939 784 A1**
(43) Date of publication of application: **19.01.2022**
(21) Application number: 20773651.3
(22) Date of filing: 11.03.2020
(51) Int. Cl.: B32B 23/06, B32B 29/08, F24F 3/147, F28F 3/00, F28F 3/08, F28F 21/00, F28F 21/08, D21H 21/14, F24F 7/08, D21H 27/30, B32B 7/027

(54) **TOTAL HEAT EXCHANGE ELEMENT**

(30) Priority: 15.03.2019 JP 2019048098; 27.03.2019 JP 2019061438; 27.03.2019 JP 2019061439; 24.01.2020 JP 2020010308; 10.02.2020 JP 2020020262
(71) Applicant: Mitsubishi Paper Mills Limited, Tokyo 130-0026 (JP)
(72) Inventor: YAMANE, Kengo, Tokyo 130-0026 (JP); HOSAKA, Kenichi, Tokyo 130-0026 (JP)
(74) Representative: Gerauer, Marc Philippé
(86) International application number: PCT/JP2020/010459
(87) International publication number: WO 2020/189433

(57) **Abstract**

A total heat exchanging element which is obtained by bonding liners and flutes together and can keep excellent total heat exchange efficiency, wherein each of the liners contains a moisture absorbent in an amount of 1 to 10 g/m², and each of the flutes has a water contact angle 2 seconds after dropping of 60° to 120°.

## Description

### TECHNICAL FIELD

The present invention relates to a total heat exchanging element which carries out the exchange of sensible heat (temperature) and latent heat (humidity) at the same time and which is mounted on a total heat exchanger for supplying fresh outdoor air into a room and discharging foul air in the room to keep a comfortable space in buildings, offices, stores and houses.

### BACKGROUND ART

As a ventilation method having excellent air-conditioning efficiency for indoor air-conditioning, there is well known total heat exchange that the exchange of temperature (sensible heat) and humidity (latent heat) is carried out at the same time between an air supply flow for supplying fresh outdoor air and an exhaust flow for discharging foul indoor air.

A total heat exchanging element for carrying out total heat exchange is formed by manufacturing corrugated sheets, each comprising a total exchange element paper (liner) as a member for exchanging temperature and humidity and a spacing board (flute) as a member for securing a flow channel for carrying out air supply and exhaust, by using a device called "corrugator" and bonding them together. Since an air supply flow and an exhaust flow are formed by independent channels with a liner therebetween and total heat exchange is carried out between them in this total heat exchanging element, when indoor ventilation is carried out with a total heat exchanger having this total heat exchanging element, air-conditioning efficiency can be greatly improved. Studies have been made on the total heat exchanging element to keep total heat exchange efficiency, especially, humidity exchange efficiency from dropping from its initial value.

To meet this demand, there is disclosed a method of manufacturing a total heat exchanging element containing a moisture absorbent, comprising the step of bonding a liner sheet and a corrugated sheet together to prepare a piece of single-faced corrugated cardboard and the step of stacking plural pieces of the single-faced corrugated cardboard obtained in the previous step in such a manner that corrugated stripe directions of respective two adjacent pieces of single-faced corrugated cardboard are allowed to cross with each other, wherein R1 is 1 to 20 g/m² and R1/R2 is 0.5 to 2.0 when, before pieces of single-faced corrugated cardboard are stacked, the content of the moisture absorbent in the liner sheet and the content of the moisture absorbent in the corrugated sheet are defined as R1 and R2, respectively (Patent Document 1). However, this total heat exchanging element has room for improvement so as to keep high total heat exchange efficiency. There is also disclosed a total heat exchanging element having partition boards and spacing boards for keeping a space between two adjacent partition boards, wherein the partition boards and the spacing boards are bonded together by an aqueous adhesive, the partition boards contain a water-soluble moisture absorbent and a thickener, and the thickener is at least one selected from the group consisting of water-soluble polyoxyethylene, hydroxyethyl cellulose and anionic polymers having a lithium ion as a counter ion, all of which have a weight average molecular weight of 100,000 or more (Patent Document 2). However, this total heat exchanging element has room for improvement so as to keep high total heat exchange efficiency as well.

### PRIOR ART DOCUMENTS

### PATENT DOCUMENTS

Patent Document 1: WO2015/098592 pamphlet
Patent Document 2: JP-A 2009-250585 publication

### DISCLOSURE OF THE INVENTION

### PROBLEM TO BE SOLVED BY THE INVENTION

It is an object of the present invention to provide a total heat exchanging element having excellent total heat exchange efficiency for constituting a total heat exchanger, especially a total heat exchanging element which hardly experiences a drop in total heat exchange efficiency after manufacture and can keep initial total heat exchange efficiency for a long time. Other objects and advantages of the present invention will become apparent from the following description.

### MEANS FOR SOLVING THE PROBLEM

The above object of the present invention can be attained by the following means.

(1) A total heat exchanging element obtained by bonding liners and flutes together, wherein each of the liners contains a moisture absorbent in an amount of 1 to 10 g/m² and each of the flutes has a water contact angle 2 seconds after dropping of 60° to 120°.
(2)The total heat exchanging element in the above paragraph (1), wherein the flute has an attenuation of the water contact angle 1 minute after dropping of 50° or less.
(3)The total heat exchanging element in the above paragraph (1), wherein the flute has a Stoeckigt sizing degree of 30 seconds or more.
(4)The total heat exchanging element in any one of the above paragraphs (1) to (3), wherein the flute contains a moisture absorbent.

### EFFECT OF THE INVENTION

According to the present invention, there can be provided a total heat exchanging element which minimizes the movement of a moisture absorbent between the liner and the flute after it is used for a certain period of time, hardly experiences a drop in total heat exchange efficiency even after it is used for a certain period of time and can keep high total heat exchange efficiency.

A detailed description is subsequently given of the total heat exchanging element of the present invention.

A description is first given of a substrate sheet used in the liner and the flute of the present invention. The substrate sheet in the present invention is preferably a sheet produced from natural pulp by a wet method. As the natural pulp, wood pulp fibers such as hardwood bleached kraft pulp (LBKP), softwood bleached kraft pulp (NBKP), hardwood bleached sulfite pulp (LBSP), softwood bleached sulfite pulp (NBSP), softwood unbleached kraft pulp (NUKP) and hardwood unbleached kraft pulp (LUKP) are preferably used alone or in combination. As other fibers, vegetable fibers such as cotton, cotton linters, hemp, bamboo, sugar cane, corn and kenaf; animal fibers such as wool and silk; and cellulose regenerated fibers such as rayon, cupra and lyocell may be used alone or in combination to be blended with the above natural pulp fibers.

Examples of beating and dispersion devices used to prepare the natural pulp fibers include a beater, PFI mill, single disk refiner (SDR), double disk refiner (DDR), ball mill which is used to disperse or pulverize a pigment, dyno-mill, grinder, rotational blade homogenizer which applies shear force with a high-speed rotating blade, double-cylinder high-speed homogenizer which generates shear force between a cylindrical inner blade rotating at high speed and a fixed outer blade, ultrasonic crusher for microfabrication with ultrasonic impact, and high-pressure homogenizer which increases the speed of a fiber suspension by passing through a small-diameter orifice by applying a pressure difference of at least 20 MPa and colliding it to reduce the speed abruptly, thereby applying shear force and cutting force to fibers. Out of these, a refiner is preferred. The natural pulp fibers of interest can be obtained by adjusting the types of the beating and dispersion devices and processing conditions (fiber concentration, temperature, pressure, the number of revolutions, the shape of the blade of a refiner, a gap between the plates of a refiner and the number of times of processing).

The substrate sheet may contain a filler selected from light calcium carbonate, heavy calcium carbonate, talc, clay and kaolin, and optionally additives such as sizing agent, fixing agent, yield improving agent, cationization agent exemplified by cationic resin and polyvalent cationic salt, and paper strengthening agent so as to obtain required density, smoothness and moisture retention. As other additives, a pigment dispersant, thickener, fluidity improving agent, defoaming agent, foam inhibitor, release agent, foaming agent, penetrant, coloring dye, coloring pigment, fluorescent brightening agent, ultraviolet absorbent, antioxidant, antiseptic, antifungal agent, water resistance imparting agent, wet paper strength enhancer and dry paper strength enhancer may be used alone or in combination of two or more as long as the desired effect of the present invention is not impaired.

To produce the substrate sheet, a wet method for forming natural pulp into a sheet by using an ordinary fourdrinier papermaking machine or cylinder papermaking machine is employed.

The substrate sheet may be subjected to surface size pressing with a size press or roll coater installed in a papermaking machine so as to obtain required density, smoothness, air permeability and strength. As the components of a surface size press liquid, starch refined from a natural plant, hydroxyethylated starch, oxidized starch, etherified starch, starch phosphate, enzyme modified starch, cool water-soluble starch obtained by flash drying them and synthetic binders such as polyvinyl alcohol may be used.

The substrate sheet may be calendered so as to obtain required density, smoothness, air permeability and strength. As a calender, a calender having at least one combination of rolls selected from the group consisting of a combination of hard rolls, a combination of elastic rolls and a combination of a hard roll and an elastic roll is preferably used. Examples of the calender include machine calender, soft-nip calender, super calender, multi-stage calender and multi-nip calender.

Although the weight, thickness and density of the substrate sheet are not particularly limited, from the viewpoint of total heat exchange efficiency, a liner having low weight, small thickness and high density is preferred. The weight is preferably 20 to 80 g/m², more preferably 30 to 50 g/m². The thickness is preferably 20 to 80 µm, more preferably 30 to 50 µm. The density is preferably 0.8 to 1.1 g/cm³, more preferably 0.9 to 1.1 g/cm³. From the viewpoint of processability, a flute having higher weight, larger thickness and lower density than the liner is preferred. The weight is preferably 40 to 100 g/m², more preferably 50 to 80 g/m². The thickness is preferably 50 to 120 pm, more preferably 60 to 100 µm. The density is preferably 0.6 to 0.9 g/cm³, more preferably 0.7 to 0.9 g/cm³.

A moisture absorbent is contained in the substrate sheet to improve and keep humidity exchange efficiency. Examples of the moisture absorbent include inorganic acid salts, organic acid salts, inorganic fillers, polyhydric alcohols, urea's and moisture absorbing (water absorbing) polymers. The inorganic acid salts include lithium chloride, calcium chloride and magnesium chloride. The organic acid salts include sodium lactate, calcium lactate and sodium pyrrolidone carboxylate. The inorganic fillers include aluminum hydroxide, calcium carbonate, aluminum silicate, magnesium silicate, talc, clay, zeolite, diatomaceous earth, sepiolite, silica gel and activated carbon. The polyhydric alcohols include glycerin, ethylene glycol, triethylene glycol and polyglycerin. The urea's include urea and hydroxyethyl urea. The moisture absorbing (water absorbing) polymers include polyaspartic acid, polyacrylic acid, polyglutamic acid, polylysine, alginic acid, carboxymethyl cellulose, hydroxyalkyl cellulose and salts thereof or crosslinked products thereof, carrageenan, pectin, gellan gum, agar, xanthan gum, hyaluronic acid, guar gum, Arabian gum, starch and crosslinked products thereof, polyethylene glycol, polypropylene glycol, collagen, acrylonitrile-based polymer saponified products, starch/acrylic acid salt graft copolymers, vinyl acetate/acrylic acid salt copolymer saponified products, starch/acrylonitrile graft copolymers, acrylic acid salt/acrylamide copolymers, polyvinyl alcohol/maleic anhydride copolymers, polyethylene oxide-based, isobutylene/maleic anhydride copolymers and polysaccharide/acrylic acid salt graft self-crosslinked products. The type and amount of the moisture absorbent are selected and used according to target humidity exchange efficiency. As the moisture absorbent used in the present invention, alkali metal salts such as lithium chloride and group II element salts such as calcium chloride and magnesium chloride are preferred. Out of these, lithium chloride and calcium chloride having high water absorptivity are more preferred. Calcium chloride is most preferred from the viewpoints of cost and humidity exchange efficiency.

The amount of the moisture absorbent contained in the liner of the total heat exchanging element is 1 to 10 g/m², preferably 3 to 7 g/m². When the amount is smaller than 1 g/m², high total heat exchange efficiency cannot be obtained and when the amount is larger than 10 g/m², the effect reaches a ceiling and moisture resistance deteriorates, whereby water dripping may occur during the use of the total heat exchanging element, the total heat exchanging element may deform, or fatal damage may be given to a total heat exchanger.

Although the moisture absorbent may be contained in the flute of the total heat exchanging element as required, even after the total heat exchanging element is used for a certain period of time, total heat exchange efficiency hardly drops and high total heat exchange efficiency is easily kept when the flute contains the moisture absorbent. Preferably, the amount of the moisture absorbent contained in the flute is equal to, preferably more than that of the liner.

The water contact angle 2 seconds after dropping in the flute is 60° to 120°, preferably 80° to 120°. In the process of manufacturing the total heat exchanging element, the movement of the moisture absorbent between the liner and the flute occurs not a few times. When the water contact angle 2 seconds after dropping in the flute is smaller than 60°, the movement of the moisture absorbent from the liner to the flute becomes large, thereby reducing total heat exchange efficiency. When the water contact angle 2 seconds after dropping in the flute is larger than 120°, adhesive strength between the liner and the flute becomes low, whereby air leakage may occur in the total heat exchanging element.

To control the water contact angle in the flute, for example, a method in which the amounts of chemicals to be added to the substrate sheet used in the flute are adjusted, a method in which the amount of a surface size press chemical to be applied to the substrate sheet is adjusted, a method in which a moisture absorbent is contained in the flute and a method in which the flute is impregnated with binders are employed. They are not particularly limited.

In the present invention, the attenuation of the water contact angle 1 minute after dropping in the flute is preferably 50° or less, more preferably 30° or less. The attenuation of the water contact angle 1 minute after dropping in the flute means a difference between the water contact angle 2 seconds after dropping and the water contact angle 1 minute after dropping in the flute and calculated from "water contact angle 2 seconds after dropping - water contact angle 1 minute after dropping". When the attenuation is 50° or less, total heat exchange efficiency hardly drops after manufacture and initial total heat exchange efficiency after manufacture can be kept well. As the attenuation becomes smaller, total heat exchange efficiency more hardly drops advantageously.

To adjust the attenuation of the water contact angle 1 minute after dropping in the flute, for example, a method in which the amounts of chemicals to be added to the substrate sheet used in the flute are adjusted, a method in which the amount of a surface size press chemical to be applied to the substrate sheet is adjusted, a method in which the density of the flute is adjusted and a method in which the flute is impregnated with binder are employed. They are not particularly limited.

A detailed description is subsequently given of a method of measuring the water contact angle. To begin with, a flute for evaluation is left at a temperature of 23°C and a humidity of 50 % RH for 24 hours or more for humidity control. Thereafter, 4 µL of ion exchange water having a conductivity of 1 µS/cm or less as a test liquid is dropped on the flute for evaluation under the same environment to measure the contact angle (°) 2 seconds after dropping. For the measurement of the contact angle, the PG-X+ contact angle meter of Fibro System AB is used to measure the contact angle at 5 arbitrary points of the surface of the flute. The average value of the 5-point measurement data is calculated and taken as the water contact angle 2 seconds after dropping in the flute. Then, the flute is left as it is to measure the water contact angle at 5 points 1 minute after dropping so as to calculate the average value of the measurement data and take it as the water contact angle 1 minute after dropping in the flute.

The Stoeckigt sizing degree of the flute is preferably 30 seconds or more. The Stoeckigt sizing degree means a sizing degree (water permeation resistance) measured by a Stoeckigt method specified in "Paper and board - Determination of sizing-Stoeckigt method" of JIS P 8122:2004. When the Stoeckigt sizing degree is 30 seconds or more, total heat exchange efficiency hardly drops after manufacture and initial total heat exchange efficiency after manufacture can be kept well.

To adjust the Stoeckigt sizing degree of the flute, for example, a method in which the weight of the flute is controlled, a method in which the amounts of chemicals and fillers to be added to the substrate sheet used in the flute are adjusted, a method in which the amount of a surface size press chemical to be applied to the substrate sheet is adjusted, a method in which the density of the flute is adjusted and a method in which the flute is impregnated with various binders are employed. They are not particularly limited.

A flame retardant may be contained in the substrate sheet to provide flame retardancy. Examples of the flame retardant include inorganic flame retardants, inorganic phosphorus-based compounds, nitrogen-containing compounds, chlorine-based compounds and bromine-based compounds. For example, aqueous solutions of a mixture of borax and boric acid, aluminum hydroxide, antimony trioxide, ammonium phosphate, ammonium polyphosphate, ammonium sulfamate, guanidine sulfamate, guanidine phosphate, amide phosphate, chlorinated polyolefin, ammonium bromide and non-ether type polybromo cyclic compound and flame retardants dispersible in water may be used. As for the level of flame retardancy, the carbonization length measured by "Testing Method for Incombustibility of Thin Materials for Buildings" specified in JIS A 1322:1966 is preferably less than 10 cm. The amount of the flame retardant is not particularly limited but preferably 5 to 10 g/m² though this depends on the flame retardant in use. The flame retardant may be used in an amount of more than 10 g/m² but its effect reaches a ceiling.

A mildewproof agent may be contained in the substrate sheet to provide mildew resistance. Products which are generally commercially available as mildewproof agents may be used as the mildewproof agent. Examples of the mildewproof agent include organic nitrogen compounds, sulfur-based compounds, organic acid esters, organic iodine-based imidazole compounds and benzazole compounds. As for the level of mildew resistance, it is preferred that the growth of mycelia measured by "Methods of test for fungus resistance" specified in JIS Z 2911:2010 should not be observed. The amount of the mildewproof agent is preferably 0.5 to 5 g/m². The mildewproof agent may be contained in an amount of more than 5 g/m² but its effect reaches a ceiling.

To contain components such as a moisture absorbent, flame retardant and mildewproof agent in the substrate sheet, a method in which these components can be contained in the substrate sheet as uniformly as possible may be employed without restriction. They may be contained separately, or a mixture of these may be contained. For example, a method in which a solution or dispersion containing these components is applied to, impregnated into or sprayed on the substrate sheet and the solvent or dispersion medium is removed by drying to contain these components in the substrate sheet is employed. The moisture content of the substrate sheet after drying is preferably 25 mass% or less, more preferably 15 mass% or less. When the water content is higher than 25 mass%, blocking may occur during winding after manufacture.

### EXAMPLES

The following examples are provided for the purpose of further illustrating the present invention but are in no way to be taken as limiting. "%" and "parts" in examples mean "mass%" and "parts by mass", respectively, unless other noted.

### Example 1

After softwood bleached kraft pulp (NBKP) was dissociated to a concentration of 3 %, 2.5 parts of aluminum sulfate and 0.15 part of an internal sizing agent were added to 100 parts of a pulp slurry which had been completely beaten by using a double disk refiner and a deluxe finer to prepare a paper material. Thereafter, a substrate sheet for liners having a weight of 40 g/m² was manufactured with a fourdrinier papermaking machine by using the paper material. Further, 5.1 g/m² of calcium chloride was contained as a moisture absorbent in the obtained substrate sheet by impregnation with a nip coater at a speed of 60 m/min and a nip pressure of 343 kPa and dried to ensure that the moisture content became 10 % so as to obtain a liner for use in a total heat exchanging element.

Subsequently, after softwood bleached kraft pulp (NBKP) was dissociated to a concentration of 3 %, 2.5 parts of aluminum sulfate, 0.5 part of an internal sizing agent and 1.5 parts of a paper strengthening agent were added to 100 parts of a pulp slurry which had been beaten by using a double disk refiner and a deluxe finer to prepare a paper material. After 0.8 part of starch and 0.8 part of a sizing agent were contained with a size press apparatus in both sides of a paper produced with a fourdrinier papermaking machine by using the paper material, machine calendaring was carried out to manufacture a substrate sheet for flutes having a weight of 60 g/m². This substrate sheet for flutes was used as a flute directly. The water contact angle 2 seconds after dropping in the flute was 117°. The obtained liners and flutes were bonded together by using an adhesive to manufacture a total heat exchanging element having a length of 300 mm, a width of 300 mm, a height of 300 mm and a step height of 2.0 mm.

### Example 2

A total heat exchanging element was manufactured in the same manner as in Example 1 except that 2.5 parts of aluminum sulfate, 0.5 part of an internal sizing agent and 1.0 part of a paper strengthening agent were added to 100 parts of a pulp slurry to prepare a paper material and 0.2 part of starch and 0.2 part of a sizing agent were contained in both sides of a paper made by papermaking with a size press apparatus in the production process of a flute.

### Example 3

A total heat exchanging element was manufactured in the same manner as in Example 1 except that 2.5 parts of aluminum sulfate and 0.3 part of an internal sizing agent were added to 100 parts of a pulp slurry to prepare a paper material and starch and a sizing agent were not contained in both sides of a paper made by papermaking with a size press apparatus in the production process of a flute.

### Example 4

A total heat exchanging element was manufactured in the same manner as in Example 1 except that 2.5 parts of aluminum sulfate and 0.15 part of an internal sizing agent were added to 100 parts of a pulp slurry to prepare a paper material and starch and a sizing agent were not contained in both sides of a paper made by papermaking with a size press apparatus in the production process of a flute.

### Example 5

A total heat exchanging element was manufactured in the same manner as in Example 3 except that 1.6 g/m² of calcium chloride was contained as a moisture absorbent in the substrate sheet for flutes by impregnation with a nip coater at a speed of 60 m/min and a nip pressure of 343 kPa and dried to ensure that the moisture content became 10 % so as to obtain a flute in the production process of a flute.

### Example 6

A total heat exchanging element was manufactured in the same manner as in Example 5 except that 4.9 g/m² of calcium chloride was contained as a moisture absorbent in the production process of a flute.

### Example 7

A total heat exchanging element was manufactured in the same manner as in Example 5 except that 9.0 g/m² of calcium chloride was contained as a moisture absorbent in the production process of a flute.

### Example 8

A total heat exchanging element was manufactured in the same manner as in Example 2 except that 1.2 g/m² of calcium chloride was contained as a moisture absorbent in the production process of a liner.

### Example 9

A total heat exchanging element was manufactured in the same manner as in Example 2 except that 9.5 g/m² of calcium chloride was contained as a moisture absorbent in the production process of a liner.

### Example 10

A total heat exchanging element was manufactured in the same manner as in Example 9 except that 0.1 part of starch and 0.1 part of a sizing agent were contained with a size press apparatus in the production process of a flute.

### Example 11

A total heat exchanging element was manufactured in the same manner as in Example 9 except that 0.05 part of starch and 0.05 part of a sizing agent were contained with a size press apparatus in the production process of a flute.

### Example 12

A total heat exchanging element was manufactured in the same manner as in Example 9 except that starch and a sizing agent were not contained with a size press apparatus in the production process of a flute.

### Example 13

A total heat exchanging element was manufactured in the same manner as in Example 3 except that 0.1 part of starch and 0.1 part of a sizing agent were contained with a size press apparatus in the production process of a flute.

### Example 14

A total heat exchanging element was manufactured in the same manner as in Example 4 except that 0.1 part of starch and 0.1 part of a sizing agent were contained with a size press apparatus in the production process of a flute.

### Example 15

A total heat exchanging element was manufactured in the same manner as in Example 1 except that 0.5 part of starch and 0.5 part of a sizing agent were contained with a size press apparatus in the production process of a flute.

### Example 16

A total heat exchanging element was manufactured in the same manner as in Example 1 except that 0.2 part of starch and 0.2 part of a sizing agent were contained with a size press apparatus in the production process of a flute.

### Example 17

A total heat exchanging element was manufactured in the same manner as in Example 4 except that 0.3 part of starch and 0.3 part of a sizing agent were contained with a size press apparatus in the production process of a flute.

### Example 18

A total heat exchanging element was manufactured in the same manner as in Example 4 except that 0.6 part of starch and 0.6 part of a sizing agent were contained with a size press apparatus in the production process of a flute.

### Comparative Example 1

A total heat exchanging element was manufactured in the same manner as in Example 1 except that 3.0 parts of aluminum sulfate, 1.0 part of an internal sizing agent and 2.0 part of a paper strengthening agent were added to 100 parts of a pulp slurry to prepare a paper material and 1.5 parts of starch and 1.5 parts of a sizing agent were contained in both sides of a paper made by papermaking with a size press apparatus in the production process of a flute.

### Comparative Example 2

A total heat exchanging element was manufactured in the same manner as in Example 1 except that 1.5 parts of aluminum sulfate and 0.1 part of an internal sizing agent were added to 100 parts of a pulp slurry to prepare a paper material and starch and a sizing agent were not contained in both sides of a paper made by papermaking with a size press apparatus in the production process of a flute.

### Comparative Example 3

A total heat exchanging element was manufactured in the same manner as in Example 2 except that 0.5 g/m² of calcium chloride was contained as a moisture absorbent in the production process of a liner.

### Comparative Example 4

A total heat exchanging element was manufactured in the same manner as in Example 2 except that 10.5 g/m² of calcium chloride was contained as a moisture absorbent in the production process of a liner.

All the total heat exchanging elements of Examples and Comparative Examples were evaluated by the following methods, and the evaluation results are shown in Tables 1 and 2.

### [method of determining the amount of calcium chloride]

The amount of calcium chloride in each liner and each flute shown in Table 1 was measured by using a sample for determination which was collected from the liner and flute of each total heat exchanging element. About 0.1 g of a sample was cut out carefully from a part to which the adhesive of the liner and flute of the total heat exchanging element was not adhered and used as the sample for determination. The accurate amount of each of the samples for determination was measured, immersed in 100 ml of super pure water and irradiated with ultrasonic waves for 60 minutes to extract calcium chloride as a moisture absorbent. Thereafter, calcium chloride was filtered with a 0.45 µm disk filter to obtain the content of a calcium ion with ICP-AES (manufactured by Perkin Elmer) and determine the mass-based amount (g/g) of calcium chloride by collating it with a calibration curve drawn in advance. The amount (g/m²) of calcium chloride was calculated from the mass-based amount of calcium chloride and the weights of the liner and the flute.

### [method of evaluating total heat exchange efficiency of total heat exchanging element]

The total heat exchange efficiency of each of the manufactured total heat exchanging elements (element size: 300 mm in length, 300 mm in width, 300 mm in height, 2.0 mm in step height) after manufacture and the total heat exchange efficiency of each total heat exchanging element after it had been operated under cooling conditions described in "Air to air heat exchanger" as a total heat exchanger specified in JIS B 8628:2003 at an air flow of 200 m³/hr for 30 days were measured. The evaluation criteria are given below.

⊚ (Excellent): total heat exchange efficiency of 60 % or more
o (Good): total heat exchange efficiency of 55 % or more and less than 60 %
Δ (Average): heat exchange efficiency of 50 % or more and less than 55 %
x (Poor): heat exchange efficiency of less than 50 %

**[Table 1]**

| | Contact angle of flute (°) | Attenuation of contact angle of flute (°) | Content of moisture absorbent in liner (g/m²) | Content of moisture absorbent in flute (g/m²) | Initial total heat exchange efficiency after manufacture (%) | Eva. | Total heat exchange efficiency after 30 days (%) | Eva. |
|---|---|---|---|---|---|---|---|---|
| Ex.1 | 117 | 6 | 5.1 | 0.0 | 56 | ○ | 55 | ○ |
| Ex.2 | 100 | 2 | 5.1 | 0.0 | 56 | ○ | 55 | ○ |
| Ex.3 | 80 | 46 | 5.1 | 0.0 | 55 | ○ | 52 | Δ |
| Ex.4 | 62 | 49 | 5.1 | 0.0 | 56 | ○ | 50 | Δ |
| Ex.5 | 78 | 48 | 5.1 | 1.6 | 56 | ○ | 53 | Δ |
| Ex.6 | 70 | 52 | 5.1 | 4.9 | 56 | ○ | 56 | ○ |
| Ex.7 | 61 | 58 | 5.1 | 9.0 | 56 | ○ | 60 | ⊚ |
| Ex.8 | 100 | 2 | 1.2 | 0.0 | 52 | Δ | 51 | Δ |
| Ex.9 | 100 | 2 | 9.5 | 0.0 | 62 | ⊚ | 60 | ⊚ |
| Ex.10 | 97 | 9 | 9.5 | 0.0 | 61 | ⊚ | 57 | ○ |
| Ex.11 | 98 | 31 | 9.5 | 0.0 | 60 | ⊚ | 55 | ○ |
| Ex.12 | 96 | 65 | 9.5 | 0.0 | 61 | ⊚ | 52 | Δ |
| Ex.13 | 82 | 8 | 5.1 | 0.0 | 55 | ○ | 55 | ○ |
| Ex.14 | 64 | 10 | 5.1 | 0.0 | 56 | ○ | 55 | ○ |
| C.Ex.1 | 123 | 1 | 5.1 | 0.0 | 55 | ○ | Eva. cancelled | |
| C.Ex.2 | 55 | 48 | 5.1 | 0.0 | 56 | ○ | 49 | X |
| C.Ex.3 | 100 | 2 | 0.5 | 0.0 | 48 | X | 48 | X |
| C.Ex.4 | 100 | 2 | 10.5 | 0.0 | 65 | ⊚ | Eva. cancelled | |

| | | | | | | | | |
|---|---|---|---|---|---|---|---|---|
| Ex.: Example; C.Ex.: Comparative Example; Eva.: Evaluation | | | | | | | | |

**[Table 2]**

| | Contact angle of flute (°) | Stoeckigt size degree of flute (sec.) | Content of moisture absorbent in liner (g/m²) | Content of moisture absorbent in flute (g/m²) | Initial total heat exchange efficiency after manufacture (%) | Eva. | Total heat exchange efficiency after 30 days (%) | Eva. |
|---|---|---|---|---|---|---|---|---|
| Ex.1 | 117 | 80 | 5.1 | 0.0 | 56 | ○ | 55 | ○ |
| Ex.2 | 100 | 4 | 5.1 | 0.0 | 56 | ○ | 55 | ○ |
| Ex.3 | 80 | 2 | 5.1 | 0.0 | 55 | ○ | 52 | Δ |
| Ex.4 | 62 | 1 | 5.1 | 0.0 | 56 | ○ | 50 | Δ |
| Ex.5 | 78 | 2 | 5.1 | 1.6 | 56 | ○ | 53 | Δ |
| Ex.6 | 70 | 1 | 5.1 | 4.9 | 56 | ○ | 56 | ○ |
| Ex.7 | 61 | 1 | 5.1 | 9.0 | 56 | ○ | 60 | ⊚ |
| Ex.8 | 100 | 4 | 1.2 | 0.0 | 52 | Δ | 51 | Δ |
| Ex.9 | 100 | 4 | 9.5 | 0.0 | 62 | ⊚ | 60 | ⊚ |
| Ex.15 | 115 | 32 | 5.1 | 0.0 | 56 | ○ | 55 | ○ |
| Ex.16 | 116 | 11 | 5.1 | 0.0 | 56 | ○ | 52 | Δ |
| Ex.17 | 61 | 24 | 5.1 | 0.0 | 56 | ○ | 52 | Δ |
| Ex.18 | 60 | 38 | 5.1 | 0.0 | 56 | ○ | 55 | ○ |
| C.Ex.1 | 123 | 67 | 5.1 | 0.0 | 55 | ○ | Eva. cancelled | |
| C.Ex.2 | 55 | 0.5 | 5.1 | 0.0 | 56 | ○ | 49 | X |
| C.Ex.3 | 100 | 4 | 0.5 | 0.0 | 48 | X | 48 | X |
| C.Ex.4 | 100 | 4 | 10.5 | 0.0 | 65 | ⊚ | Eva. cancelled | |

| | | | | | | | | |
|---|---|---|---|---|---|---|---|---|
| Ex.: Example; C.Ex.: Comparative Example; Eva.: Evaluation | | | | | | | | |

It is understood from comparison between Examples 1 to 9 and Comparative Examples 1 to 4 that, out of the total heat exchanging elements manufactured by bonding the liners and the flutes together, the total heat exchanging elements of Examples 1 to 9 having a content of the moisture absorbent in the liner of 1 to 10 g/m² and a water contact angle 2 seconds after dropping in the flute of 60° to 120° have excellent total heat exchange efficiency, hardly experience a drop in total heat exchange efficiency and can keep high total heat exchange efficiency. In the total heat exchanging element of Comparative Example 2 whose water contact angle 2 seconds after dropping in the flute is lower than the lower limit and the total heat exchanging element of Comparative Example 3 whose content of the moisture absorbent in the liner is lower than the lower limit, total heat exchange efficiency dropped. Since water dripping occurred in the total heat exchanging element of Comparative Example 4 whose content of the moisture absorbent in the liner is higher than the upper limit and air leakage occurred in the total heat exchanging element of Comparative Example 1, they could not be operated for 30 days and accordingly their evaluations were cancelled halfway although total heat exchange efficiency could be measured after the manufacture of the total heat exchanging elements.

It is understood from Examples 1 to 4 that the total heat exchanging elements are excellent because a drop in the total heat exchange efficiency of each of the total heat exchanging elements 30 days after manufacture becomes smaller as the water contact angle 2 seconds after dropping in the flute becomes larger as compared with the total heat exchanging element right after manufacture.

It is understood from Example 2 and Examples 8 and 9 that, as the content of the moisture absorbent in the liner becomes higher, total heat exchange efficiency becomes higher. It is also understood from Examples 3 and Examples 5 to 7 that when a moisture absorbent is contained in the flute, a drop in the total heat exchange efficiency of the total heat exchanging element after 30 days is small as compared with the total heat exchanging element right after manufacture, which proves that the total heat exchanging element is excellent.

It is understood from Examples 9 to 12 that the total heat exchanging elements (Examples 9 to 11) having an attenuation of the contact angle 1 minute after dropping in the flute of 50° or less are excellent as a drop in total heat exchange efficiency after 30 days is small as compared with the total heat exchanging elements right after manufacture. It is also understood that as the attenuation is smaller, total heat exchange efficiency more hardly drops. Further, it is understood from comparison between Example 3 and Example 13 and comparison between Example 4 and Example 14 that as the attenuation becomes smaller, total heat exchange efficiency more hardly drops.

It is also understood from comparison among Examples 1, 15 and 16 and comparison among Examples 4, 17 and 18 that the total heat exchanging elements after 30 days having a Stoeckigt sizing degree of the flute of 30 seconds or more experience a small drop in total heat exchange efficiency as compared with the total heat exchanging elements right after manufacture, which proves that they are excellent.

### INDUSTIAL FEASIBILITY

The total heat exchanging element of the present invention is used as the total heat exchanging element of a total heat exchanger which carries out the exchange of temperature (sensible heat) and humidity (latent heat) at the time of supplying fresh air and discharging foul indoor air.

## Claims

1. A total heat exchanging element obtained by bonding liners and flutes together, wherein each of the liners contains a moisture absorbent in an amount of 1 to 10 g/m² and each of the flutes has a water contact angle 2 seconds after dropping of 60° to 120°.

2. The total heat exchanging element according to claim 1, wherein the flute has an attenuation of the water contact angle 1 minute after dropping of 50° or less.

3. The total heat exchanging element according to claim 1, wherein the flute has a Stoeckigt sizing degree of 30 seconds or more.

4. The total heat exchanging element according to any one of claims 1 to 3, wherein the flute contains a moisture absorbent.
